# FASCICULE DE BREVET EUROPEEN

(11) **EP 2 380 420 B1**
(45) Date de publication et mention de la délivrance du brevet: **10.04.2013**
(21) Numéro de dépôt: 11305471.2
(22) Date de dépôt: 20.04.2011
(51) Int. Cl.: A01B 1/06

(54) **Appareil motorisé portatif pour le travail du sol**
Tragbares motorisiertes Gerät zur Bodenbearbeitung
Portable motorised device for working the soil

(30) Priorité: 21.04.2010 FR 1053027
(43) Date de publication de la demande: 26.10.2011
(73) Titulaire: PELLENC (Société Anonyme), 84120 Pertuis (FR)
(72) Inventeur: Pellenc, Roger, 84120 Pertuis (FR)
(74) Mandataire: Nuss, Laurent

(56) Documents cités:
- DE-A1-102007 034 908
- FR-A1- 2 530 917
- FR-A1- 2 541 849
- FR-A1- 2 860 124
- FR-A2- 2 546 706

## Description

La présente invention concerne le domaine des outils de travail du sol, notamment de traitement des jardins et espaces verts, et en particulier celui des dispositifs d'outils portables, munis de leur propre source d'énergie électrique, et manipulés directement par l'utilisateur. L'invention porte plus spécifiquement sur un dispositif d'outil motorisé portatif pour le travail du sol, plus particulièrement du type bineuse électrique.

On connaît déjà de nombreuses variantes de réalisation d'outils de ce type, à maniement entièrement manuel ou à assistance motorisée.

Ces outils présentent des formes diverses, en particulier au niveau de l'extrémité travaillant le sol, ce en fonction de la nature du travail à effectuer et éventuellement de la nature du sol et de la végétation.

En ce qui concerne les outils manuels (non motorisés) :
US-A-3 965 991 divulgue une binette munie d'un manche allongé, au bout duquel est disposé, avec faculté de rotation autour d'un axe perpendiculaire audit manche, un outil de coupe. Ce dernier présente une lame affutée le long de chacune de ses grandes longueurs, pliée en forme de U, et insérée par ses extrémités dans les deux extrémités libres d'un tube aplati, lui aussi plié en forme de U, l'âme de ce dernier étant solidaire du manche.
FR-A-2 394 971 divulgue une binette de constitution semblable à celle décrite plus haut. L'outil de coupe, lui aussi légèrement mobile en rotation, est constitué par une lame pliée en forme de U, mais dont les ailes sont pliées à leur extrémité de façon parallèle à l'âme du U. C'est au niveau de ces deux extrémités que la lame est alors prise entre deux plaques métalliques, assujetties au manche de l'appareil.

Néanmoins, ces dispositifs manuels présentent de nombreux inconvénients. Le premier est commun à toutes les bineuses ou outils similaires à maniement manuel, et consiste en un maniement fastidieux et en une fatigue rapide de l'utilisateur. De plus, ce dernier est obligé, notamment pour des raisons ergonomiques, de changer d'outil dès qu'il veut changer d'opération : arracher des mauvaises herbes, aérer le sol, casser les mottes de terre, tailler les bordures, etc. Il lui faut donc transporter différents outils entiers.

En ce qui concerne les outils motorisés ou à assistance motorisée :
US-A-4 305 470 divulgue une bineuse électrique, dont le moteur est situé à l'extrémité haute du manche située à opposée de l'outil de coupe. Le moteur entraîne un arbre en rotation dans le manche, qui, grâce à deux excentriques successifs, crée un mouvement de rotation de va-et-vient de l'outil de coupe. Néanmoins, de par son montage, l'entretien et l'éventuel remplacement de la lame sont des opérations fastidieuses et peu ergonomiques. De plus, l'emplacement du moteur ne permet pas d'utiliser avantageusement le poids de ce dernier, en particulier pour améliorer la pénétration de la lame dans le sol. En outre, aucun réglage du mouvement ou de la position de la lame n'est prévu.

FR-A-2 530 917 qui montre les caractéristiques du préambule de la revendication 1, divulgue une bineuse électrique dont le moteur est localisé à la même extrémité du manche que l'outil de coupe (extrémité inférieure), ce qui permet de profiter de son poids. Toutefois, avec cette configuration, comme avec celle décrite dans US-A-4 305 470, l'outil de coupe en deux parties doit être solidarisée de part et d'autre de la tête, ce qui nécessite des accès des deux côtés et crée ainsi un grand nombre d'ouvertures possibles pour des poussières accélérant l'encrassement du moteur, ainsi que de pièces de roulement ou de paliers sensibles à la rupture. De plus, des pierres se retrouvent fréquemment coincées entre les deux parties de l'outil lors de l'utilisation, obligeant à arrêter le travail en cours.

Ces deux constructions connues d'outils motorisés partagent également l'inconvénient majeur de ne pas permettre d'orienter, par rapport au manche, la position médiane de l'outil de coupe par rapport à laquelle il effectue son va-et-vient, alors qu'il a été constaté que cette position médiane est un des paramètres essentiels déterminant le confort d'utilisation et l'efficacité des appareils de travail du sol. Or, la hauteur de préhension de l'appareil, ainsi que la déclivité du sol travaillé, empêchent de garantir que cette position médiane soit systématiquement idéale.

Par ailleurs, le document FR-A-2 546 706 divulgue deux types différents d'appareils motorisés pour le travail du sol, pouvant être montés sur un même manche traversé par un arbre d'entraînement.

Le premier type d'appareil (représenté figures 1 à 4 de ce document) comprend deux outils en forme de bêches montés de part et d'autre d'un boîtier de renvoi d'angle. Ces deux bêches sont animées de mouvements elliptiques déphasés de 180°, ce par l'intermédiaire de mécanismes bielle/manivelle et en étant guidées en translation dans un palier monté articulé sur un bras support orientable.

Ainsi, ce premier type d'appareil, outre une constitution et un mécanisme de transformation des mouvements complexes, comporte plusieurs outils déphasés, animés de mouvements de rotation continus. De plus, l'axe d'entraînement des bêches et leur axe de pivotement sont distincts et décalés.

Le second type d'appareil divulgué par le document FR-A-2 546 706 (représenté figures 5 à 7) comporte quant à lui plusieurs outils animés d'un mouvement de rotation continu.

Enfin, le document DE-A-10 2007 034 908 a pour objet une pioche ou binette motorisée, montée sur roues. Cet appareil comprend un moteur rotatif entraînant un mécanisme complexe de transformation de mouvement à deux sorties, lequel déplace les outils fixés à l'extrémité de coulisses selon des mouvements elliptiques cycliques déphasés de 180°.

En outre, aucun des outils de ces deux derniers documents n'effectue un travail de binage.

La présente invention a notamment pour but de surmonter les inconvénients des solutions connues et évoquées ci-dessus, en proposant un appareil motorisé portatif pour le travail du sol, tel qu'une bineuse ou une griffe notamment, de constitution simple, notamment pour la transmission du mouvement, et dont l'outil est facilement interchangeable et effectue en fonctionnement une action de binage. De plus, cet appareil devra autoriser une adaptation ergonomique à l'utilisateur, au type de travail à réaliser et/ou à la nature ou la configuration du sol.

En outre, l'outil devrait être fixé simplement par un nombre minimum de points de solidarisation, en particulier le cas échéant par un seul.

A cet effet, l'invention a pour objet un appareil motorisé portatif pour le travail de la terre et du sol, du type bineuse, sarcloir, griffe ou analogue, comprenant, d'une part, un manche qui comporte, à une première extrémité, une zone et/ou au moins un organe de préhension pour l'utilisateur, et, à l'extrémité opposée, une tête à laquelle est relié par une liaison rotatoire ou pivotante, un outil de travail qui, en utilisation de l'appareil, est animé d'un mouvement oscillant alternatif sur une fraction de tour et autour d'une position angulaire médiane déterminée, ce sous l'effet du mouvement transmis par un dispositif d'entraînement comprenant au moins un actionneur électrique ou un moteur thermique,
appareil motorisé portatif caractérisé en ce que l'outil de travail est relié à la tête de manière amovible, en étant monté sur un arbre d'entraînement animé d'un mouvement rotatif oscillant alternatif et formant axe d'oscillation vertical ou horizontal pour l'outil et en ce que la position angulaire médiane dudit outil de travail est réglable.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 est une vue de côté, montrant l'appareil motorisé portatif selon un premier mode de réalisation de l'invention en cours d'utilisation ;
- les figures 2A et 2B sont des vues en perspective selon deux directions différentes de l'appareil représenté figure 1, la batterie et le cordon d'alimentation étant enlevés ;
- la figure 3 est une vue en perspective de l'appareil représenté figure 2, muni d'un outil de travail différent, la tête étant tournée de 90° autour de l'axe du manche par rapport à la figure 2 ;
- les figures 4A et 4B sont des vues en perspective de la tête de l'appareil selon l'invention, partiellement ouverte ;
- la figure 5 est une vue en perspective, partiellement éclatée, montrant le montage de l'outil de travail de l'appareil de la figure 1 ;
- la figure 6 est une vue en perspective éclatée, montrant à une échelle différente le montage de la pièce intermédiaire sur l'arbre de la tête en accord avec la figure 5 ;
- la figure 7 est une vue de côté en coupe du montage de la pièce intermédiaire sur l'arbre de la tête, comme ressortant de la figure 5, et,
- la figure 8 est une vue en perspective d'une autre variante de réalisation de l'outil de travail faisant partie de l'appareil selon l'invention, pouvant être monté en lieu et place de l'outil de travail représenté sur les figures 1, 2 et 5 ;
- les figures 9A et 9B sont des vues en élévation frontale et en perspective à une échelle différente d'un ensemble [tête / pièce de liaison / outil] faisant partie de l'outil de travail représenté figure 3, et,
- la figure 9C est une vue à une échelle différente du détail B de la figure 9B.

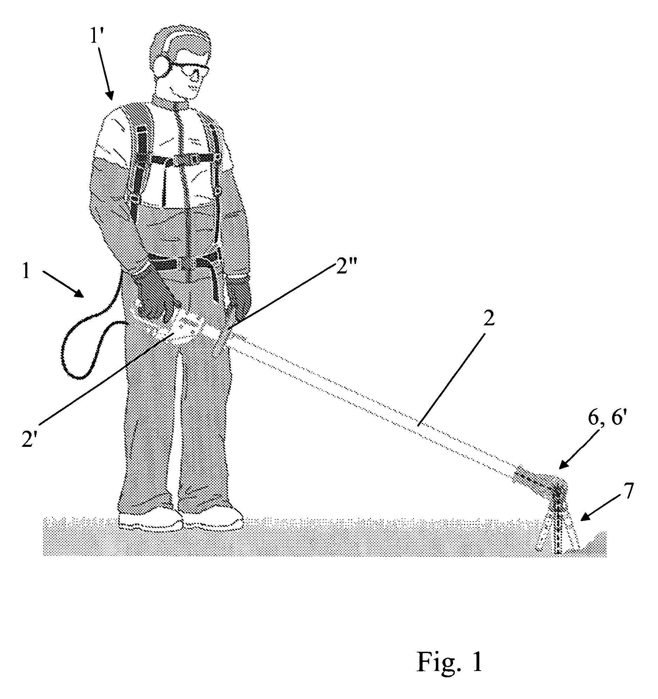

Les figures 1 à 3 des dessins annexés montrent un appareil motorisé portatif 1 pour le travail de la terre et du sol, du type bineuse, sarcloir, griffe ou analogue.

Cet appareil 1 comprend, d'une part, un manche 2 qui comporte, à une première extrémité 3, une zone et/ou au moins un organe de préhension pour l'utilisateur, et, à l'extrémité opposée 4, une tête 6 à laquelle est relié par une liaison rotatoire ou pivotante, un outil de travail 7 qui, en utilisation de l'appareil 1, est animé d'un mouvement oscillant alternatif sur une fraction de tour et autour d'une position angulaire médiane déterminée, ce sous l'effet du mouvement transmis par un dispositif d'entraînement 5, 5' comprenant au moins un actionneur électrique ou un moteur thermique.

Conformément à l'invention, l'outil de travail 7 est relié à la tête 6 de manière amovible, en étant monté sur un arbre d'entraînement 8 animé d'un mouvement rotatif oscillant alternatif et formant axe d'oscillation vertical ou horizontal pour l'outil 7 et la position angulaire médiane dudit outil de travail 7 est réglable.

Ainsi, l'appareil 1 peut être équipé de plusieurs outils de travail différents et ces derniers peuvent être réglés, en termes de position de travail, pour adapter l'appareil 1 à l'utilisateur en vue d'un maniement optimisé.

De plus, du fait de la fixation de l'outil directement sur l'arbre d'entraînement 8, le mécanisme de transmission du mouvement s'en trouve simplifier au maximum avec limitation des pertes de puissance dues aux frictions et aux transformations de mouvement. En outre, on s'affranchit de toute pièce susceptible d'être soumise à l'usure par la transmission du mouvement de l'outil.

La double fonction de support de fixation et d'organe d'entraînement de l'arbre 8 par rapport à l'outil 7 nécessite un montage rigide et résistant de ce dernier dans la tête 6.

De plus, sa fonction d'axe de pivotement pour l'outil 7, durant son mouvement alternatif permettant d'obtenir un effet de travail de la terre analogue à un binage, détermine son orientation, normalement perpendiculaire à l'axe longitudinal du manche 2.

Enfin, l'absence de mécanisme complexe de transmission et de transformation du mouvement permet également de disposer d'un appareil plus simple, plus fiable et moins accidentogène.

Afin de simplifier la construction de l'appareil 1 et de rendre le plus aisé possible le montage et le démontage de l'outil 7, il peut être avantageusement prévu que ce dernier est relié à la tête 6 par un unique point de fixation, en étant monté latéralement ou sur un côté de ladite tête 6.

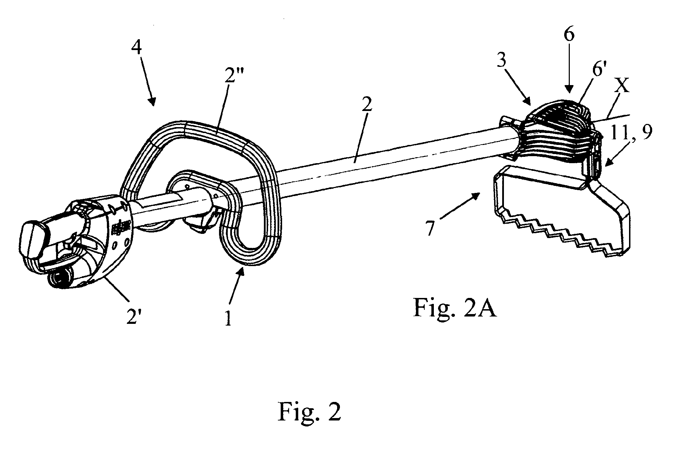

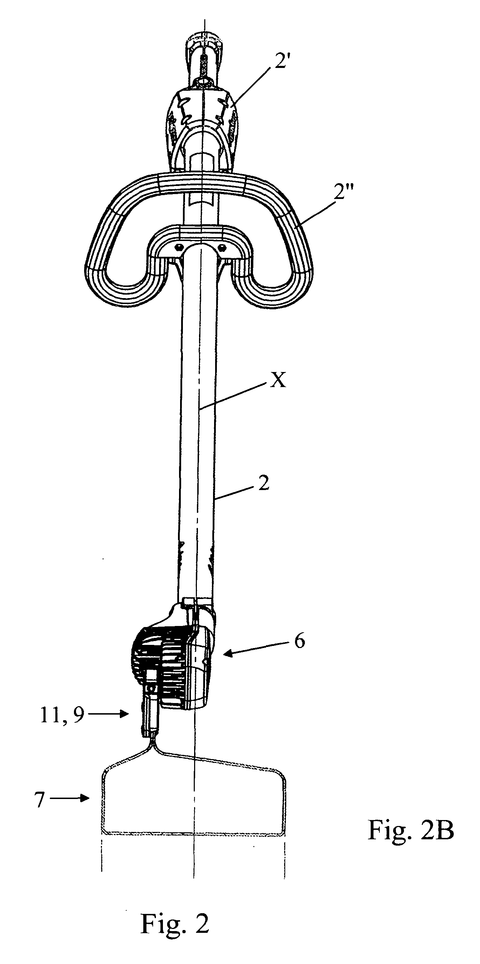

Le mode de fixation et la forme de l'outil sont conçus de manière telle que ledit outil 7 est positionné de manière symétrique par rapport à l'axe longitudinal X du manche 2, après montage et fixation sur la tête 6 (Fig. 2B).

Ces dispositions permettent d'interchanger aisément les outils de travail 7, de mettre en oeuvre des outils 7 de largeurs différentes, en particulier avec des largeurs nettement supérieures à la tête 6, et de positionner l'outil 7 par rapport au manche 2 de manière à avoir un confort d'utilisation maximal pour l'opérateur.

Comme le montrent également les figures 1 à 3, le manche 2 est avantageusement pourvu d'une poignée 2' à son extrémité 3 opposée à la tête 6, cette poignée 2' intégrant une carte électronique de commande de l'actionneur électrique 5, relié à des organes de commande et de sélection de vitesses.

Ainsi, l'opérateur ou l'utilisateur peut adapter le fonctionnement de l'appareil 1 selon l'outil de travail utilisé, la nature et la consistance du sol et, plus généralement, le facteur à privilégier (confort, efficacité, rapidité).

Le manche 2 peut également comporter une poignée supplémentaire 2" pour la tenue de l'appareil 1 en utilisation, éventuellement fixée sur le manche 2 avec interposition de moyens d'amortissement des vibrations (mousse, rondelles ou cylindres en caoutchouc ou analogues).

En accord avec une caractéristique de l'invention, permettant d'augmenter la polyvalence de l'appareil 1 en termes de conditions d'utilisation et de travaux réalisables, et d'élargir la gamme d'outils de travail 7 pouvant être mis en oeuvre, la tête 6 est préférentiellement solidarisée avec le manche 2 par un moyen de fixation autorisant un montage avec blocage en position de ladite tête 6 dans au moins deux positionnements angulaires mutuellement décalés autour de l'axe longitudinal dudit manche 2, par exemple d'environ 90°.

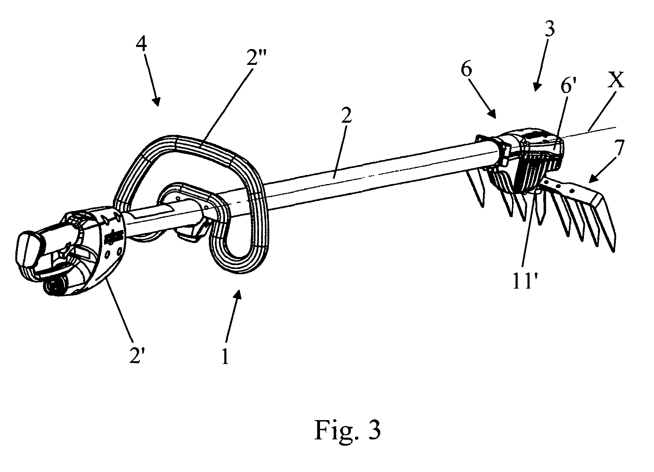

Ainsi, comme cela ressort d'une comparaison des figures 2 et 3, il est possible de mettre en oeuvre des outils 7 qui oscillent soit autour d'un axe vertical (figure 3), soit autour d'un axe horizontal (figure 2). Un même outil 7 peut éventuellement être utilisé dans les deux orientations, en fonction des travaux à effectuer.

Bien que le dispositif d'entraînement 5, 5' puisse être monté en un emplacement quelconque du manche 2 (au niveau d'une portion médiane ou au niveau de la poignée 2'), il est avantageusement prévu selon l'invention que le dispositif d'entraînement (comprenant un actionneur électrique 5 ou un moteur thermique) est intégré dans la tête 6, ce dispositif comprenant le cas échéant aussi un système 5' de transmission, et éventuellement de transformation de mouvement, associé audit actionneur ou moteur.

Un des intérêts de placer le dispositif d'entraînement 5 au niveau de la deuxième extrémité 4 du manche 2 est que le poids de ce dispositif facilite la pénétration et le maintien de l'outil 7 dans le sol travaillé. Ainsi, il ne sera pas nécessaire à l'utilisateur d'appuyer outre mesure sur le dispositif d'outil motorisé 1 afin de garantir une pénétration de l'outil 7 en profondeur.

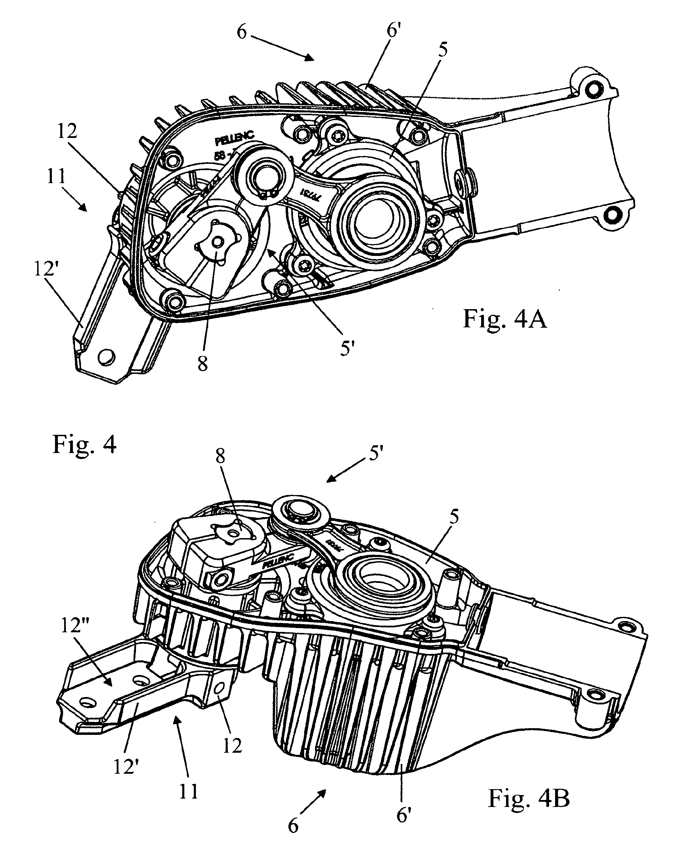

La tête 6 comprend préférentiellement, comme le montrent plus en détails les figures 4A et 4B (en relation avec les figures 2 et 3), un carter 6' renfermant le dispositif d'entraînement, qui est par exemple formé de deux demi-coques métalliques assemblées de manière étanche, et qui est prolongé par un manchon de raccordement destiné à être fixé sur l'extrémité 4 du manche 2 (éventuellement avec possibilité d'orientation). Le carter 6' présente une constitution suffisamment rigide et résistante pour transmettre les sollicitations et efforts entre le manche 2 et l'outil 7 (éventuellement présence d'ailettes de raidissement et de refroidissement).

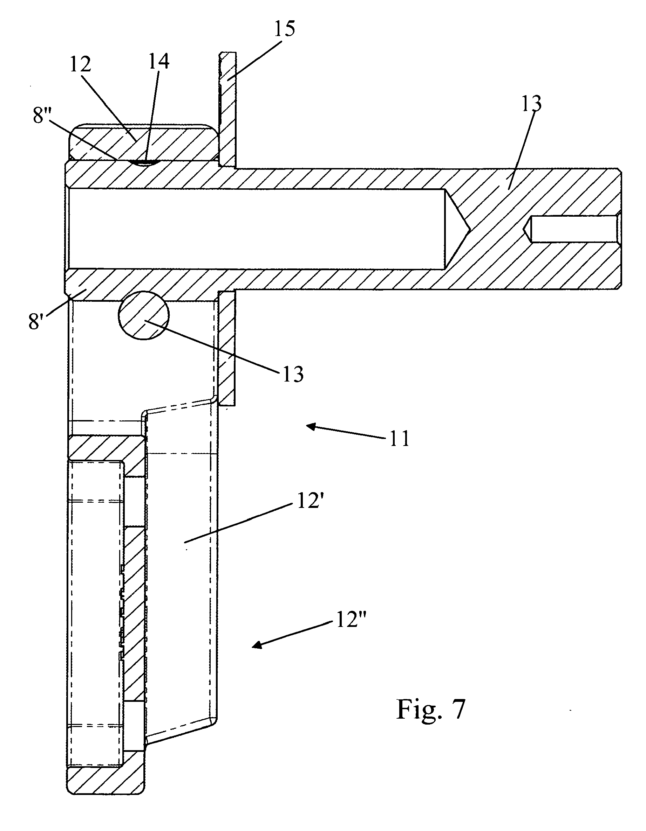

En accord avec une variante constructive préférée de l'invention, ressortant des figures 4 à 7 et 9 des dessins, et partiellement des figures 2 et 3, l'outil de travail 7 est monté sur une partie saillante 8' d'un arbre 8, débouchant hors du carter de la tête 6 et préférentiellement orientée sensiblement à angle droit par rapport à l'axe longitudinal X du manche 2, ce montage de l'outil de travail 7 étant réalisé au moyen d'une pièce intermédiaire 11 de liaison, de support et de maintien solidarisée rigidement et avec une extension radiale audit arbre 8 ou au moyen d'une pièce de liaison 11' avec un site de connexion adapté et faisant partie de l'outil de travail 7 ou associée à ce dernier.

Ces dispositions permettent de faciliter le montage et le démontage de l'outil 7, pour entretien, maintenance et remplacement, ou encore pour éviter les risques de blessures lorsque l'appareil 1 n'est pas utilisé. L'arbre 8 débouche du carter 6' de la tête 6 qui le contient avantageusement par une seule, mais éventuellement également par chacune de ses extrémités. Si l'arbre 8 débouche par ses deux extrémités, l'outil 7 pourra être fixé à l'une ou à l'autre des extrémités de l'arbre 8, au choix de l'utilisateur (droitier - gaucher) ou en fonction des travaux à effectuer.

Le montage d'un outil de travail 7 à deux points de fixation peut alors également être envisagé.

L'arbre 8 est monté rotatif dans au moins un palier correspondant faisant partie de la tête 6, préférentiellement un palier étanche formé dans le carter 6' et fermant ce dernier au niveau de la partie saillante externe 8' dudit arbre 8.

Comme évoqué précédemment, le dispositif d'entraînement peut comprendre un actionneur électrique ou un moteur thermique entraînant, avec ou sans réduction, l'arbre 8, après transformation du mouvement continu en mouvement alternatif.

Bien qu'un actionneur électrique linéaire alternatif puisse être envisagé, il est proposé dans le cadre de l'invention que l'actionneur électrique 5 soit préférentiellement un moteur électrique rotatif (par exemple un moteur sans balais).

Le dispositif d'entraînement peut alors consister en un actionneur 5 du type moteur rotatif, associé à un réducteur de grand rapport (par exemple compris entre 15 et 50, avantageusement de l'ordre de 20 à 30) et à un système 5' de transmission et de transformation de mouvement, par exemple du type bielle / manivelle, de manière à entraîner l'arbre 8 dans un mouvement de rotation oscillant alternatif.

Toutefois, en variante, il peut également être envisagé que le dispositif d'entraînement consiste en un moteur électrique 5 dont le mouvement de rotation continue est directement transformé, par un système 5' de transformation de mouvement entraînant l'arbre 8, en un mouvement rotatif oscillant alternatif.

Un tel mécanisme de transformation de mouvement est connu en lui-même et des variantes sont divulguées, par exemple, dans les documents cités, et donc sa réalisation pratique est du ressort des connaissances professionnelles de l'homme du métier.

En variante, le système 5' pourrait éventuellement consister en, d'une part, une fourche ou une ouverture oblongue aménagée au niveau de l'outil 7, et, d'autre part, un pion excentrique situé sur un arbre présentant une rotation continue et circulant dans la fourche qu'il entraîne en un mouvement pendulaire.

Pour conférer une liberté de mouvement totale à l'utilisateur et autoriser une mise en oeuvre de l'appareil 1 dans un site quelconque, l'actionneur électrique 5 est avantageusement alimenté par une source de puissance autonome 1', destinée à être portée par l'utilisateur et faisant partie de l'appareil motorisé portatif 1.

Afin de disposer d'une autonomie suffisante, la source de puissance autonome 1' consiste en une batterie électrique rechargeable du type Li-Ion ou Li-Polymère, préférentiellement porté par l'utilisateur au moyen d'un harnais. La batterie 1' peut, par exemple, être du type mentionné dans les documents FR 2 920 683 et FR 2 920 913 ou non de la demanderesse.

En vue d'autoriser l'utilisateur à régler l'appareil 1 pour un confort d'usage maximal, en particulier une utilisation à effort minimisé, l'outil de travail 7 est rapporté, avec plusieurs positions angulaires médianes possibles, sur la partie 8' de l'arbre 8 débouchant hors de la tête 6, et est apte à être fixé dans une position indexée, située à l'intérieur d'une plage de positions angulaires, autour dudit arbre 8 et déterminant la position angulaire médiane.

Les inventeurs ont pu constater, de manière inattendue et surprenante, que la plage de positions angulaires comprend des positions indexées correspondant, pour au moins un type d'outil 7 déterminé et pour un utilisateur donné, et donc pour une inclinaison donnée du manche 2 par rapport au sol, à des positions angulaires médianes telles que l'outil de travail 7 présente un mouvement d'avance ou de progression autonome et automatique plus ou moins important, associé à une pénétration plus ou moins profonde et inversement proportionnelle de l'outil de travail 7 dans le sol.

Conformément à un premier mode de réalisation de l'invention, adapté plus particulièrement à des outils 7 oscillant autour d'un axe horizontal en utilisation et représenté notamment aux figures 1, 2 et 4 à 7, l'outil de travail 7 comporte une patte de fixation 9 unique, laquelle est destinée à être solidarisée rigidement avec la pièce intermédiaire 11, préférentiellement en venant en engagement dans celle-ci avec coopération de formes supplémentaires.

Cette patte 9 est positionnée de telle manière que l'outil 7 est avantageusement sensiblement centré par rapport à l'axe X du manche 2 (figure 2B).

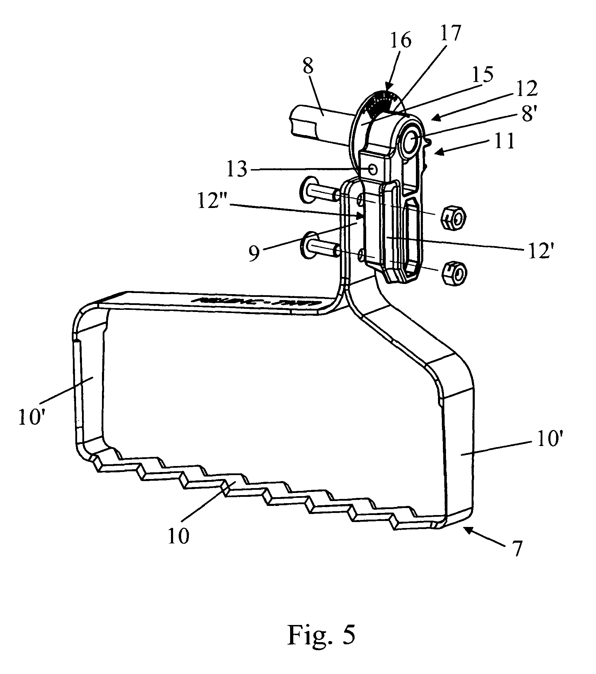

Comme le montrent plus précisément les figures 5 à 7 des dessins, le corps de la pièce intermédiaire 11 comprend essentiellement deux parties 12 et 12' d'un seul tenant, à savoir, d'une part, une première partie 12 en forme de U intégrant une bague ouverte à crantage ou denture intérieure, destinée à venir en engagement avec un crantage ou une denture 8" complémentaire présent(e) sur la partie saillante 8' de l'arbre 8 et, d'autre part, une seconde partie 12' formant platine de fixation pour la patte 9 de l'outil de travail 7.

Afin de garantir un assujettissement en rotation sans jeu et de grande rigidité entre l'arbre 8 et l'outil 7, autorisant la transmission d'un couple important, tout en permettant un montage, un démontage et un réglage aisés, la pièce intermédiaire 11 est assujettie à la partie saillante 8' de l'arbre 8 par l'intermédiaire d'une vis, goupille ou analogue 13 traversant les branches du U prolongeant la bague ouverte de la première partie 12 et venant en engagement dans une gorge 14 circulaire ménagée sur la partie saillante 8' de l'arbre 8 et la seconde partie 12' formant platine présente une empreinte 12" destinée à recevoir la patte 9 de l'outil de travail 7 de manière calée, l'engagement avec emboîtement de ladite patte 9 dans ladite empreinte 12" étant verrouillé, par exemple par au moins deux vis ou analogues.

Les sollicitations résultant du couple sont, par conséquent, transmises entre la pièce 11 et l'outil 7 essentiellement par l'intermédiaire de cet engagement par emboîtement, et non par les vis de verrouillage.

Comme le montre en particulier la figure 5, l'emboîtement 9/12" s'effectue sur une relative grande longueur afin de répartir les efforts.

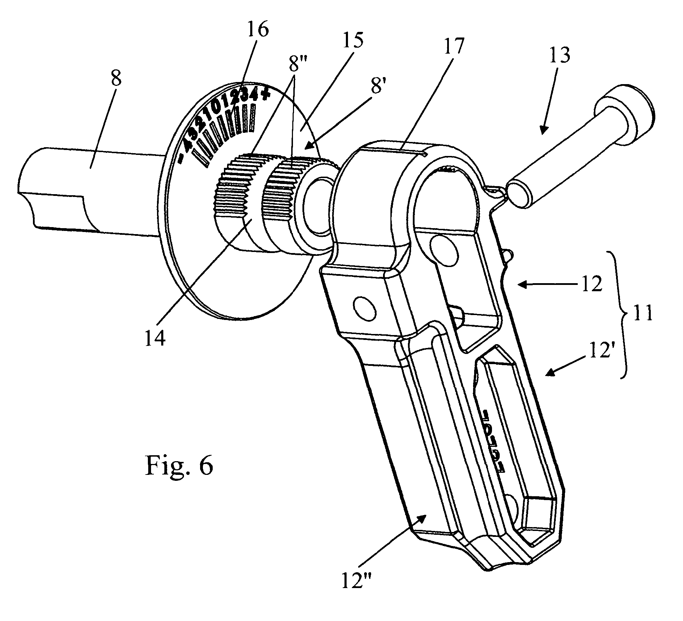

Pour permettre à l'utilisateur de régler de manière contrôlée la position de l'outil 7 par rapport au manche 2, il peut être prévu que la partie saillante 8' de l'arbre 8 soit munie d'une platine ou d'un cadran 15 comportant une graduation angulaire 16, et que la pièce intermédiaire 11 ou l'outil de travail 7 soit muni d'un repère d'indexation 17, situé en vis-à-vis de ladite graduation angulaire 16 en position montée de ladite pièce intermédiaire 11, avec ou sans l'outil 7 (figures 5 et 6).

Il convient de noter, en relation avec le mode de réalisation des figures 1, 2 et 4 à 7, que seul un mouvement guidé de rotation autour d'un axe sensiblement parallèle au sol travaillé et perpendiculaire au manche 2, est possible pour l'outil 7. Lors d'au moins une partie de son mouvement de va-et-vient, l'outil 7 se trouve dans le sol, et peut donc aérer la terre, couper les racines des mauvaises herbes, etc. Le réglage de la position de l'outil 7, effectué avant la mise en route de la machine, définit donc la position médiane autour de laquelle s'effectuera le va-et-vient de cet outil.

De manière préférée, la position angulaire médiane de l'outil de travail 7 est réglée de telle manière qu'en position d'utilisation normale ledit outil 7 effectue un mouvement pendulaire symétrique sensiblement autour de la verticale par rapport au sol.

La course pendulaire de l'outil 7 est également choisie dans une plage de débattement représentant une fraction de tour, par exemple pour une amplitude de mouvement comprise entre environ 15° et environ 40°, préférentiellement d'une amplitude d'environ 20° à 30°.

Selon l'invention, il est donc possible de choisir la fixation de l'outil 7 et de garantir que la position médiane corresponde toujours à la configuration idéale, quelle que soit la taille de l'utilisateur, le décalage vertical entre le plan de travail et le plan dans lequel se trouve l'utilisateur, ou encore la différence de pente entre le sol travaillé et le sol sur lequel se tient l'utilisateur. Ce réglage permet donc de garantir que la position médiane de l'outil 7 soit au moins sensiblement dans un plan perpendiculaire au sol travaillé, quel que soit l'angle du manche 2 par rapport à ce sol, dans une situation de travail.

Toutefois, il est également possible de tirer profit de cette possibilité de réglage en fixant volontairement l'outil de travail 7 de sorte que sa position médiane ne soit pas dans un plan perpendiculaire au sol travaillé. Elle peut, par exemple, se trouver dans un plan qui s'élève vers l'utilisateur, ce qui aura pour tendance de faire avancer l'outil de coupe 7 sans aucun effort. Si elle se trouve dans un plan qui s'élève en s'éloignant de l'utilisateur, l'outil de coupe 7 aura tendance à se rapprocher naturellement de l'utilisateur.

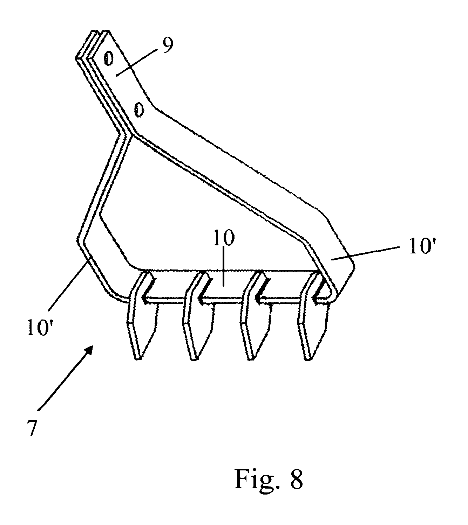

De manière avantageuse et au moins en relation avec les formes d'outil 7 représentées aux figures 2, 5 et 8, la position médiane angulaire de l'outil 7 est sélectionnée de manière à résulter en un positionnement sensiblement à angle droit par rapport à la surface du sol travaillé, l'appareil 1 nécessitant alors un minimum d'effort pour sa manipulation et progressant même tout seul dans la direction visée sans sollicitation de l'utilisateur.

En fonction des travaux à effectuer, de la nature du sol et du mode d'utilisation (vertical/horizontal) de l'appareil 1 par l'utilisateur, l'outil de travail 7 peut présenter différentes formes.

En relation avec les figures 1, 2 et 4 à 8, et selon une variante de réalisation pratique très avantageuse de l'invention, l'outil de travail 7 présente une forme générale en boucle fermée, munie d'une patte de fixation 9 à l'arbre 8.

Plus particulièrement, l'outil 7 peut être réalisé par une unique bande de matière, préférentiellement métallique, dont les extrémités se rejoignent pour former la patte de fixation 9, cette patte étant ou non centrée par rapport à l'outil 7.

Selon une caractéristique de construction préférée, l'outil de travail 7 a une forme de boucle fermée, de forme générale sensiblement rectangulaire, dont une première portion 10, sensiblement plane et parallèle au sol en cours d'utilisation de l'appareil 1, est tranchante et munie de dents, préférentiellement au niveau de ses deux côtés opposés, et dont deux deuxièmes portions 10', prolongeant de part et d'autre la première portion 10 et s'étendant dans un plan sensiblement perpendiculaire au sol en cours d'utilisation, sont tranchants.

Un tel outil de travail 7 mis en oeuvre sur un appareil 1 selon l'invention peut réaliser plusieurs fonctions simultanément, à savoir :
- une désagglomération une aération et un retournement de la terre ;
- un désherbage en profondeur (sectionnement des racines par les dents) ;
- un nivelage et un ratissage de la terre travaillée ;
- un sectionnement latéral net (fonction coupe-bordure).

En outre, les mouvements alternatifs de faible ampleur de l'outil 7, associés à un mouvement circulaire de grand rayon au niveau des parties actives de cet outil, évitent la génération d'à-coups au niveau du manche 2. Les faibles vibrations générées peuvent éventuellement être absorbés au niveau des poignées 2' et 2".

De plus, la boucle formée par le corps de l'outil 7 présentera une hauteur suffisante pour autoriser le passage de l'herbe sans bourrage dans la bouche et une largeur adaptée à la nature de l'outil 7 et à la puissance de l'actionneur 5.

En accord avec une autre variante de mise en oeuvre de l'appareil 2 selon l'invention, ressortant de la figure 3 des dessins annexés, l'outil de travail peut également être solidarisé à la partie saillante 8' de l'arbre d'entraînement 8 par l'intermédiaire d'une pièce de liaison 11' présentant un site de connexion pourvu d'un crantage ou d'une denture intérieure et apte à venir un engagement axial avec engrènement sur un crantage ou une denture 8" complémentaire présente sur la partie saillante 8', la solidarisation étant verrouillée par l'intermédiaire de vis ou analogues.

La pièce de liaison 11' peut, par exemple, intégrer une bague ouverte à crantage intérieur, à l'instar de la partie 12 de la pièce 11 (voir figures 5 à 7), pour venir un engagement sur la partie 8' et l'arbre 8, et être verrouillée en montage par une ou plusieurs vis 13.

La pièce de liaison 11' peut, en variante, également consister en une pièce de blocage en position et de verrouillage de l'outil 7 sur l'arbre 8, l'outil 7 comportant alors un crantage ou une forme intérieure coopérant avec la partie 8'.

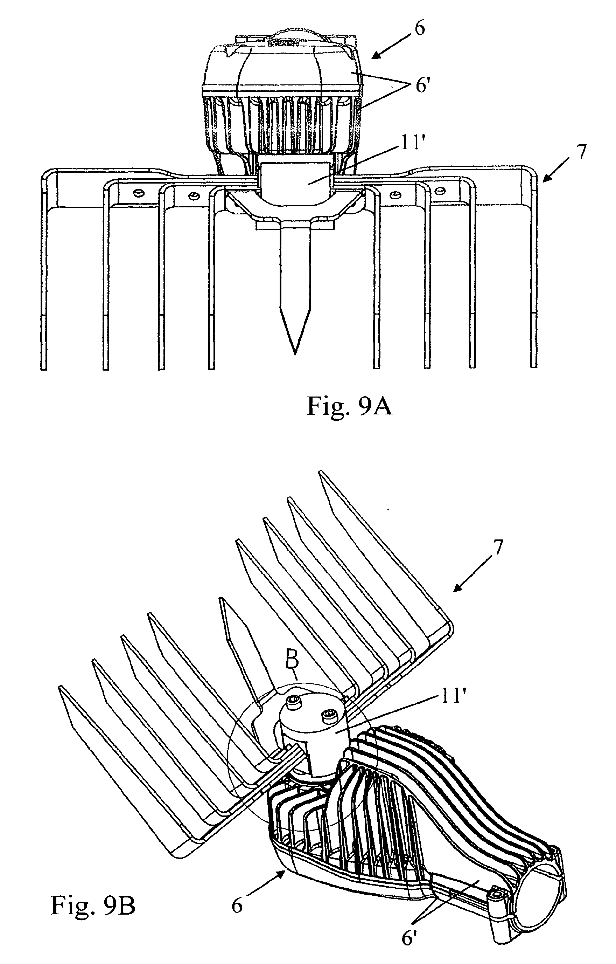

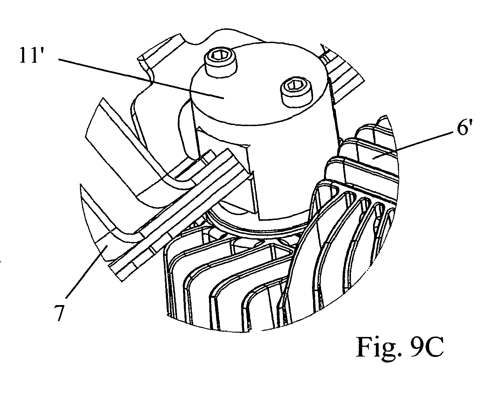

Comme le montrent à titre d'exemple les figures 3, 9A et 9B, l'outil de travail 7 peut consister en une griffe ou une fourche à dents multiple oscillant autour de l'axe de l'arbre d'entraînement 8, positionné verticalement lors de l'utilisation dudit appareil 1, ledit outil 7 pouvant présenter une disposition non perpendiculaire par rapport à l'axe longitudinal du manche 2 en position angulaire médiane, selon le réglage de cette dernière (l'utilisateur peut alors se déplacer parallèlement et à distance de la bande de sol ou de terre travaillée par l'outil 7).

Afin de limiter au maximum les secousses pour l'utilisateur lors des travaux effectués avec l'appareil 1, l'outil 7 oscille à une fréquence comprise entre 10 et 25 Hz, préférentiellement à environ 15Hz,.

Bien entendu, l'invention n'est pas limitée aux modes de réalisation décrits et représentés aux dessins annexés. Des modifications restent possibles, notamment du point de vue de la constitution des divers éléments , sans sortir pour autant du domaine de protection de l'invention telle que définie dans les revendications.

## Revendications

1. Appareil motorisé portatif (1) pour le travail de la terre et du sol, du type bineuse, sarcloir, griffe ou analogue, comprenant, d'une part, un manche (2) qui comporte, à une première extrémité (3), une zone et/ou au moins un organe de préhension pour l'utilisateur, et, à l'extrémité opposée (4), une tête (6) à laquelle est relié par une liaison rotatoire ou pivotante et de manière amovible, un outil de travail (7) qui, en utilisation de l'appareil (1), est animé d'un mouvement oscillant alternatif sur une fraction de tour et autour d'une position angulaire médiane déterminée, ce sous l'effet du mouvement transmis par un dispositif d'entraînement (5, 5') comprenant au moins un actionneur électrique ou un moteur thermique,
appareil motorisé portatif (1) **caractérisé en ce que** l'outil de travail (7) est relié à la tête (6) en étant monté sur un arbre d'entraînement (8) animé d'un mouvement rotatif oscillant alternatif et formant axe d'oscillation vertical ou horizontal pour l'outil (7) et **en ce que** la position angulaire médiane dudit outil de travail (7) est réglable.

2. Appareil selon la revendication 1, **caractérisé en ce que** l'outil de travail (7) est relié à la tête (6) par un unique point de fixation, en étant monté latéralement ou sur un côté de ladite tête (6).

3. Appareil selon l'une quelconque des revendications 1 et 2, **caractérisé en ce que** l'outil de travail (7) est positionné de manière symétrique par rapport à l'axe longitudinal (X) du manche (2), après montage et fixation sur la tête (6).

4. Appareil selon l'une quelconque des revendications 1 à 3, **caractérisé en ce que** la tête (6) est solidarisée avec le manche (2) par un moyen de fixation autorisant un montage avec blocage en position de ladite tête (6) dans au moins deux positionnements angulaires mutuellement décalés autour de l'axe longitudinal (X) dudit manche (2), par exemple d'environ 90°.

5. Appareil selon l'une quelconque des revendications 1 à 4, **caractérisé en ce que** le dispositif d'entraînement comprenant un actionneur électrique (5) ou un moteur thermique est intégré dans la tête (6), ce dispositif comprenant le cas échéant aussi un système (5') de transmission, et éventuellement de transformation de mouvement, associé audit actionneur ou moteur.

6. Appareil selon l'une quelconque des revendications 1 à 5, **caractérisé en ce que** l'outil de travail (7) est monté sur une partie saillante (8') d'un arbre (8), débouchant hors du carter de la tête (6) et préférentiellement orientée sensiblement à angle droit par rapport à l'axe longitudinal (X) du manche (2), ce montage de l'outil de travail (7) étant réalisé au moyen d'une pièce intermédiaire (11) de liaison, de support et de maintien solidarisée rigidement et avec une extension radiale audit arbre (8) ou au moyen d'une pièce de liaison (11') avec un site de connexion adapté et faisant partie de l'outil de travail (7) ou associée à ce dernier.

7. Appareil selon la revendication 6, **caractérisé en ce que** le dispositif d'entraînement consiste en un actionneur électrique (5) du type moteur rotatif associé à un réducteur de grand rapport et à un système (5') de transmission et de transformation de mouvement, par exemple du type bielle / manivelle, de manière à entraîner l'arbre (8) dans un mouvement de rotation oscillant alternatif.

8. Appareil selon la revendication 6, **caractérisé en ce que** le dispositif d'entraînement consiste en un moteur électrique (5) dont le mouvement de rotation continue est directement transformé par un système (5') de transformation de mouvement entraînant l'arbre (8) en un mouvement rotatif oscillant alternatif.

9. Appareil selon l'une quelconque des revendications 1 à 8, **caractérisé en ce que** l'actionneur électrique (5) est alimenté par une source de puissance autonome (1'), destinée à être portée par l'utilisateur et faisant partie de l'appareil motorisé portatif (1).

10. Appareil selon l'une quelconque des revendications 6 à 9, **caractérisé en ce que** l'outil de travail (7) est rapporté, avec plusieurs positions angulaires médianes possibles, sur la partie (8') de l'arbre (8) débouchant hors de la tête (6), et est apte à être fixé dans une position indexée, située à l'intérieur d'une plage de positions angulaires, autour dudit arbre (8) et déterminant la position angulaire médiane.

11. Appareil selon la revendication 10, **caractérisé en ce que** la plage de positions angulaires comprend des positions indexées correspondant, pour au moins un type d'outil (7) déterminé et pour un utilisateur donné, et donc pour une inclinaison donnée du manche (2) par rapport au sol, à des positions angulaires médianes telles que l'outil de travail (7) présente un mouvement d'avance ou de progression autonome et automatique plus ou moins important, associé à une pénétration plus ou moins profonde et inversement proportionnelle de l'outil de travail (7) dans le sol.

12. Appareil selon l'une quelconque des revendications 6 à 8, 10 et 11, **caractérisé en ce que** l'outil de travail (7) comporte une patte de fixation (9) unique, laquelle est destinée à être solidarisée rigidement avec la pièce intermédiaire (11), préférentiellement en venant en engagement dans celle-ci avec coopération de formes supplémentaires.

13. Appareil selon l'une quelconque des revendications 6 à 8 et 10 à 12, **caractérisé en ce que** le corps de la pièce intermédiaire (11) comprend essentiellement deux parties (12, 12') d'un seul tenant, à savoir, d'une part, une première partie (12) en forme de U intégrant une bague ouverte à crantage ou denture intérieure, destinée à venir en engagement avec un crantage ou une denture (8") complémentaire présent(e) sur la partie saillante (8') de l'arbre (8) et, d'autre part, une seconde partie (12') formant platine de fixation pour la patte (9) de l'outil de travail (7).

14. Appareil selon la revendication 13, **caractérisé en ce que** la pièce intermédiaire (11) est assujettie à la partie saillante (8') de l'arbre (8) par l'intermédiaire d'une vis, goupille ou analogue (13) traversant les branches du U prolongeant la bague ouverte de la première partie (12) et venant en engagement dans une gorge (14) circulaire ménagée sur la partie saillante (8') de l'arbre (8) et **en ce que** la seconde partie (12') formant platine présente une empreinte (12") destinée à recevoir la patte (9) de l'outil de travail (7) de manière calée, l'engagement avec emboîtement de ladite patte (9) dans ladite empreinte (12") étant verrouillé, par exemple par au moins deux vis ou analogues.

15. Appareil selon l'une quelconque des revendications 6 à 8 et 10 à 14, **caractérisé en ce que** la partie saillante (8') de l'arbre (8) est munie d'une platine ou d'un cadran (15) comportant une graduation angulaire (16), et **en ce que** la pièce intermédiaire (11) ou l'outil de travail (7) est muni d'un repère d'indexation (17), situé en vis-à-vis de ladite graduation angulaire (16) en position montée de ladite pièce intermédiaire (11), avec ou sans l'outil (7).

16. Appareil selon l'une quelconque des revendications 6 à 8 et 10 à 15, **caractérisé en ce que** la position angulaire médiane de l'outil de travail (7) est réglée de telle manière qu'en position d'utilisation normale ledit outil (7) effectué un mouvement pendulaire symétrique sensiblement autour de la verticale par rapport au sol, par exemple d'une amplitude comprise entre environ 15° et environ 40°, préférentiellement d'une amplitude d'environ 20° à 30°.

17. Appareil selon l'une quelconque des revendications 6 à 8 et 10 à 16, **caractérisé en ce que** l'outil de travail (7) présente une forme générale en boucle fermée, munie d'une patte de fixation (9) à l'arbre (8).

18. Appareil selon la revendication 17, **caractérisé en ce que** l'outil de travail (7) est réalisé par une unique bande de matière, préférentiellement métallique, dont les extrémités se rejoignent pour former la patte de fixation (9).

19. Appareil selon l'une quelconque des revendications 17 et 18, **caractérisé en ce que** l'outil de travail (7) a une forme de boucle fermée, de forme générale sensiblement rectangulaire, dont une première portion (10), sensiblement plane et parallèle au sol en cours d'utilisation de l'appareil (1), est tranchante et munie de dents, préférentiellement au niveau de ses deux côtés opposés, et dont deux deuxièmes portions (10'), prolongeant de part et d'autre la première portion (10) et s'étendant dans un plan sensiblement perpendiculaire au sol en cours d'utilisation, sont tranchants, préférentiellement au niveau des deux côtés opposés.

20. Appareil selon l'une quelconque des revendications 6 à 8, **caractérisé en ce que** l'outil de travail (7) est solidarisé à la partie saillante (8') de l'arbre d'entraînement (8) par l'intermédiaire d'une pièce de liaison (11') présentant un site de raccordement pourvu d'un crantage ou d'une denture intérieure et apte à venir un engagement axial avec engrènement sur un crantage ou une denture (8") complémentaire présente sur la partie saillante, la solidarisation étant verrouillée par l'intermédiaire de vis ou analogues.

21. Appareil selon la revendication 20, **caractérisé en ce que** l'outil de travail (7) consiste en une griffe ou une fourche à dents multiple oscillant autour de l'axe de l'arbre d'entraînement (8), positionné verticalement lors de l'utilisation dudit appareil (1), ledit outil (7) pouvant présenter une disposition non perpendiculaire par rapport à l'axe longitudinal du manche (2) en position angulaire médiane, selon le réglage de cette dernière.

22. Appareil selon l'une quelconque des revendications 1 à 21, **caractérisé en ce que** le manche (2) est pourvu d'une poignée (2') à son extrémité (3) opposée à la tête (6), cette poignée (2') intégrant une carte électronique de commande de l'actionneur électrique (5), relié à des organes de commande et de sélection de vitesses.

23. Appareil selon la revendication 9, **caractérisé en ce que** la source de puissance autonome (1') consiste en une batterie électrique rechargeable du type Li-Ion ou Li-Polymère, préférentiellement porté par l'utilisateur au moyen d'un harnais.

24. Appareil selon l'une quelconque des revendications 1 à 23, **caractérisé en ce que** l'outil de travail (7) oscille à une fréquence comprise entre 10 et 25 Hz, préférentiellement à environ 15Hz.

## Claims

1. Handheld motor-driven soil and ground cultivation device (1), such as a hoeing tool, weeding hoe, claw or the like, comprising, on the one hand, a handle (2) that comprises, at a first end (3), a gripping zone and/or at least one gripping element for the user, and, at the opposite end (4), a head (6) to which a work tool (7) is attached, by a rotary or pivoting link and in a removable way, which, when the device (1) is used, is driven with a reciprocating oscillating movement along a portion of rotation and around a specified middle angular position, under the action of the movement transmitted by a drive device (5, 5') comprising at least one electric actuator or a heat engine,
a handheld motor-driven device (1) **characterized in that** the work tool (7) is connected to the head (6), while being mounted on a drive shaft (8) driven with a reciprocating oscillating rotating movement and forming a vertical or horizontal axis of oscillation for the tool (7), and **in that** the middle angular position of said work tool (7) is adjustable.

2. Device according to Claim 1, wherein the work tool (7) is attached to the head (6) by a single fastening point, while being mounted laterally or on one side of said head (6).

3. Device according to any one of Claims 1 and 2, wherein the work tool (7) is positioned in a symmetrical way in relation to the longitudinal axis (X) of the handle (2), after mounting and fastening on the head (6).

4. Device according to any one of Claims 1 to 3, wherein the head (6) is attached to the handle (2) by a fastening means that allows a mounting with locking in position of said head (6) in at least two angular positions that are mutually offset around the longitudinal axis (X) of said handle (2), for example about 90°.

5. Device according to any one of Claims 1 to 4, wherein the drive device comprising an electric actuator (5) or a heat engine is incorporated into the head (6), this device comprising, if needed, also a system (5') for transmitting and optionally for conversion of movement associated with said actuator or engine.

6. Device according to any one of Claims 1 to 5, wherein the work tool (7) is mounted on a projecting part (8') of a shaft (8), coming outside of the housing of the head (6) and preferentially oriented approximately at a right angle in relation to the longitudinal axis (X) of the handle (2), this mounting of the work tool (7) being achieved by means of an intermediate part (11) for connection, for support and for maintenance that is rigidly attached and with a radial extension to said shaft (8) or by means of a connection part (11') with a connection site that is adapted and is part of the work tool (7) or associated with the latter.

7. Device according to Claim 6, wherein the drive device consists of an electric actuator (5) of the rotating motor type, associated with a high ratio reduction gear and with a system (5') for transmitting and converting movement, for example of the connecting rod / crank type, so as to drive the shaft (8) in a reciprocating oscillating rotational movement.

8. Device according to Claim 6, wherein the drive device consists of an electric motor (5) whose continuous rotational movement is directly converted, by a system (5') for converting movement that drives the shaft (8), in a reciprocating oscillating rotational movement.

9. Device according to any one of Claims 1 to 8, wherein the electric actuator (5) is supplied by an independent power source (1'), intended to be carried by the user and which is part of the handheld motor-driven device (1).

10. Device according to any one of Claims 6 to 9, wherein the work tool (7) is attached, with several possible middle angular positions, to the part (8') of the shaft (8) coming outside of the head (6), and is able to be fastened in an indexed position, located within a range of angular positions, around said shaft (8) and defining the middle angular position.

11. Device according to Claim 10, wherein the range of angular positions comprises corresponding indexed positions, for at least one type of tool (7) that is specified and for a given user, and therefore for a given inclination of the handle (2) in relation to the ground, at middle angular positions such that the work tool (7) exhibits a more or less considerable movement of advance or of independent and automatic progress, associated with a more or less deep and inversely proportional penetration of the work tool (7) into the soil.

12. Device according to any one of Claims 6 to 8, 10, and 11, wherein the work tool (7) comprises a single fastening bracket (9), which is intended to be rigidly attached to the intermediate part (11), preferentially by engaging in it with the cooperation of additional shapes.

13. Device according to any one of Claims 6 to 8 and 10 to 12, wherein the body of the intermediate part (11) comprises essentially two parts (12, 12') all in one piece, namely, on the one hand, a first U-shaped part (12) incorporating an open ring with inner notching or toothing, designed to engage with a complementary notching or a toothing (8") present on the projecting part (8') of the shaft (8), and, on the other hand, a second part (12') forming a fastening plate for the bracket (9) of the work tool (7).

14. Device according to Claim 13, wherein the intermediate part (11) is secured to the projecting part (8') of the shaft (8) by a screw, pin or the like (13) going through the branches of the U extending the open ring of the first part (12) and engaging in a circular groove (14) made on the projecting part (8') of the shaft (8), and wherein the second part (12') forming a plate exhibits an indentation (12") intended to receive the bracket (9) of the work tool (7) in a clamped way, the engagement with fitting of said bracket (9) in said indentation (12") being locked, for example, by at least two screws or the like.

15. Device according to any one of Claims 6 to 8 and 10 to 14, wherein the projecting part (8') of the shaft (8) is equipped with a plate or with a dial (15) comprising an angular graduation (16), and wherein the intermediate part (11) or the work tool (7) is provided with an indexing mark (17), located face-to-face with said angular graduation (16) in mounted position of said intermediate part (11), with or without the tool (7).

16. Device according to any one of Claims 6 to 8 and 10 to 15, wherein the middle angular position of the work tool (7) is adjusted in such a way that in a position of normal use, said tool (7) makes an approximately symmetrical pendular movement around the vertical in relation to the soil, for example with a range of between about 15° and about 40°, preferentially with a range of about 20° to 30°.

17. Device according to any one of Claims 6 to 8 and 10 to 16, wherein the work tool (7) exhibits a general closed loop shape, equipped with a bracket (9) for fastening to the shaft (8).

18. Device according to Claim 17, wherein the work tool (7) is made of a single band of material, preferentially metal, whose ends are joined to form the fastening bracket (9).

19. Device according to any one of Claims 17 and 18, wherein the work tool (7) has a closed loop shape, with an approximately rectangular general shape, of which a first portion (10), which is approximately flat and parallel to the soil during use of the device (1), is sharp and equipped with teeth, preferentially at its two opposite sides, and of which two second portions (10'), which extend on both sides of the first portion (10) and which extend into a plane that is approximately perpendicular to the soil during use, are sharp, preferentially at the two opposite sides.

20. Device according to any one of Claims 6 to 8, wherein the work tool (7) is attached to the projecting part (8') of the drive shaft (8) by a connecting part (11') that has a connection site provided with an inner notching or a toothing and that is able to engage axially with meshing on a complementary notching or a toothing (8") present on the projecting part, the attachment being locked by screws or the like.

21. Device according to Claim 20, wherein the work tool (7) consists of a claw or a fork with multiple teeth oscillating around the axis of the drive shaft (8), positioned vertically during the use of said device (1), said tool (7) being able to exhibit a non-perpendicular arrangement in relation to the longitudinal axis of the handle (2) in middle angular position, according to the adjustment of the latter.

22. Device according to any one of Claims 1 to 21, wherein the handle (2) is provided with a handle (2') at its end (3) opposite the head (6), this handle (2') incorporating an electronic card for control of the electric actuator (5), connected to elements for control and selection of speeds.

23. Device according to Claim 9, wherein the independent power source (1') consists of a rechargeable electric battery of the Li-Ion or Li-Polymer type, preferentially carried by the user by means of a harness.

24. Device according to any one of Claims 1 to 23, wherein the work tool (7) oscillates at a frequency of between 10 and 25 Hz, preferentially at about 15 Hz.

## Patentansprüche

1. Motorisiertes Handgerät (1) zur Bearbeitung der Erde und des Bodens vom Typ einer Hackmaschine, einer Jätmaschine, einer Gartenkralle oder eines analogen Geräts, das einerseits einen Stiel (2) umfasst, welcher an einem ersten Ende (3) einen Greifbereich und/oder mindestens ein Greiforgan für den Benutzer aufweist, und am gegenüberliegenden Ende (4) einen Kopf (6), mit welchem durch eine Dreh- oder Schwenkverbindung und auf lösbare Weise ein Arbeitswerkzeug (7) verbunden ist, welches bei Verwendung des Geräts (1) eine hin- und herschwingende Bewegung auf einem Teil einer Umdrehung und um eine bestimmte mittlere Winkelposition ausführt, und zwar unter der Einwirkung der Bewegung, die durch ein Antriebsvorrichtung (5, 5') übertragen wird, welche mindestens einen elektrischen Aktuator oder einen Verbrennungsmotor umfasst,
wobei das motorisierte Handgerät (1) **dadurch gekennzeichnet ist, dass** das Arbeitswerkzeug (7) mit dem Kopf (6) verbunden ist, indem es auf einer Antriebswelle (8) angebracht ist, die eine hin- und herschwingende Drehbewegung ausführt und eine vertikale oder horizontale Schwingachse für das Werkzeug (7) bildet, und dadurch, dass die mittlere Winkelposition des Arbeitswerkzeugs (7) verstellbar ist.

2. Gerät nach Anspruch 1, **dadurch gekennzeichnet, dass** das Arbeitswerkzeug (7) mit dem Kopf (6) durch einen einzigen Befestigungspunkt verbunden ist, wobei es seitlich oder an einer Seite des Kopfes (6) angebracht ist.

3. Gerät nach einem der Ansprüche 1 und 2, **dadurch gekennzeichnet, dass** das Arbeitswerkzeug (7) nach Anbringung und Befestigung am Kopf (6) symmetrisch bezüglich der Längsachse (X) des Stiels (2) positioniert ist.

4. Gerät nach einem der Ansprüche 1 bis 3, **dadurch gekennzeichnet, dass** der Kopf (6) mit dem Stiel (2) durch ein Befestigungsmittel fest verbunden ist, das eine Anbringung mit Arretierung des Kopfes (6) in mindestens zwei Winkelpositionierungen ermöglicht, die relativ zueinander um die Längsachse (X) des Stiels (2) versetzt sind, zum Beispiel um etwa 90°.

5. Gerät nach einem der Ansprüche 1 bis 4, **dadurch gekennzeichnet, dass** die Antriebsvorrichtung, die einen elektrischen Aktuator (5) oder einen Verbrennungsmotor umfasst, in den Kopf (6) integriert ist, wobei diese Vorrichtung gegebenenfalls auch ein System (5') zur Bewegungsübertragung und eventuell zur Bewegungsumwandlung umfasst, das dem Aktuator oder Motor zugeordnet ist.

6. Gerät nach einem der Ansprüche 1 bis 5, **dadurch gekennzeichnet, dass** das Arbeitswerkzeug (7) auf einem vorspringenden Teil (8') einer Welle (8) montiert ist, der aus dem Gehäuse des Kopfes (6) herausragt und vorzugsweise im Wesentlichen rechtwinklig bezüglich der Längsachse (X) des Stiels (2) ausgerichtet ist, wobei diese Montage des Arbeitswerkzeugs (7) mittels eines Zwischenstücks (11) zur Verbindung, Abstützung und Halterung, das starr und mit einer radialen Verlängerung mit der Welle (8) fest verbunden ist, oder mittels eines Verbindungsteils (11') zur Verbindung mit einem angepassten Verbindungsabschnitt, der Bestandteil des Arbeitswerkzeugs (7) ist oder diesem zugeordnet ist, realisiert ist.

7. Gerät nach Anspruch 6, **dadurch gekennzeichnet, dass** die Antriebsvorrichtung aus einem elektrischen Aktuator (5) vom Typ eines Drehmotors besteht, der einem Getriebe mit großem Untersetzungsverhältnis und einem System (5') zur Bewegungsübertragung und -umwandlung, zum Beispiel vom Typ eines Schubkurbeltriebs, zugeordnet ist, so dass die Welle (8) in einer hin- und herschwingenden Drehbewegung angetrieben wird.

8. Gerät nach Anspruch 6, **dadurch gekennzeichnet, dass** die Antriebsvorrichtung aus einem Elektromotor (5) besteht, dessen kontinuierliche Drehbewegung von einem Bewegungsumwandlungssystem (5'), das die Welle (8) antreibt, direkt in eine hin- und herschwingende Drehbewegung umgewandelt wird.

9. Gerät nach einem der Ansprüche 1 bis 8, **dadurch gekennzeichnet, dass** der elektrische Aktuator (5) von einer autonomen Energiequelle (1') gespeist wird, die dazu bestimmt ist, vom Benutzer getragen zu werden, und Bestandteil des motorisierten Handgeräts (1) ist.

10. Gerät nach einem der Ansprüche 6 bis 9, **dadurch gekennzeichnet, dass** das Arbeitswerkzeug (7), mit mehreren möglichen mittleren Winkelpositionen, an dem aus dem Kopf (6) herausragenden Teil (8') der Welle (8) angebracht ist und geeignet ist, in einer Schaltposition befestigt zu werden, die sich innerhalb eines Bereiches von Winkelpositionen um die Welle (8) herum befindet und die mittlere Winkelposition bestimmt.

11. Gerät nach Anspruch 10, **dadurch gekennzeichnet, dass** der Bereich von Winkelpositionen Schaltpositionen umfasst, die für mindestens einen bestimmten Typ von Werkzeug (7) und für einen gegebenen Benutzer und somit für eine gegebenen Neigung des Stiels (2) bezüglich des Bodens solchen mittleren Winkelpositionen entsprechen, dass das Arbeitswerkzeug (7) eine mehr oder weniger große, autonome und automatische Vorwärts- oder Fortbewegung aufweist, die mit einem mehr oder weniger tiefen und umgekehrt proportionalen Eindringen des Arbeitswerkzeugs (7) in den Boden verbunden ist.

12. Gerät nach einem der Ansprüche 6 bis 8, 10 und 11, **dadurch gekennzeichnet, dass** das Arbeitswerkzeug (7) eine einzige Befestigungslasche (9) aufweist, welche dazu bestimmt ist, starr mit dem Zwischenstück (11) verbunden zu werden, vorzugsweise indem sie in diesem durch Zusammenwirken komplementärer Formen in Eingriff gelangt.

13. Gerät nach einem der Ansprüche 6 bis 8 und 10 bis 12, **dadurch gekennzeichnet, dass** der Körper des Zwischenstücks (11) im Wesentlichen zwei aus einem Stück ausgebildete Teile (12, 12') umfasst, nämlich einerseits einen ersten, U-förmigen Teil (12), in den ein offener Ring mit Rastelementen oder einer Innenverzahnung integriert ist, der dazu bestimmt ist, mit komplementären Rastelementen oder einer komplementären Verzahnung (8") in Eingriff zu kommen, die auf dem vorspringenden Teil (8') der Welle (8) vorhanden sind (ist), und andererseits einen zweiten Teil (12'), der eine Befestigungsplatte für die Lasche (9) des Arbeitswerkzeugs (7) bildet.

14. Gerät nach Anspruch 13, **dadurch gekennzeichnet, dass** das Zwischenstück (11) an dem vorspringenden Teil (8') der Welle (8) mittels einer Schraube, eines Stiftes oder eines analogen Elements (13) festgeklemmt ist, das die Schenkel des "U", welche den offenen Ring des ersten Teils (12) verlängern, durchquert und mit einer Ringnut (14) in Eingriff kommt, die auf dem vorspringenden Teil (8') der Welle (8) ausgebildet ist, und dadurch, dass der eine Platte bildende zweite Teil (12') eine Vertiefung (12") aufweist, die dazu bestimmt ist, die Lasche (9) des Arbeitswerkzeugs (7) festklemmend aufzunehmen, wobei der Eingriff mit Einfügung der Lasche (9) in die Vertiefung (12"), zum Beispiel durch mindestens zwei Schrauben oder Ähnliches, verriegelt wird.

15. Gerät nach einem der Ansprüche 6 bis 8 und 10 bis 14, **dadurch gekennzeichnet, dass** der vorspringende Teil (8') der Welle (8) mit einer Platte oder einer Skalenscheibe (15) ausgestattet ist, die eine Winkelskala (16) aufweist, und dadurch, dass das Zwischenstück (11) oder das Arbeitswerkzeug (7) mit einer Indexmarkierung (17) ausgestattet ist, die sich in der montierten Position des Zwischenstücks (11), mit dem oder ohne das Werkzeug (7), gegenüber der Winkelskala (16) befindet.

16. Gerät nach einem der Ansprüche 6 bis 8 und 10 bis 15, **dadurch gekennzeichnet, dass** die mittlere Winkelposition des Arbeitswerkzeugs (7) derart eingestellt ist, dass das Werkzeug (7) in der normalen Betriebsposition eine symmetrische Pendelbewegung im Wesentlichen um die Vertikale bezüglich des Bodens ausführt, zum Beispiel mit einer Amplitude zwischen etwa 15° und etwa 40°, vorzugsweise mit einer Amplitude von etwa 20° bis 30°.

17. Gerät nach einem der Ansprüche 6 bis 8 und 10 bis 16, **dadurch gekennzeichnet, dass** das Arbeitswerkzeug (7) eine allgemeine Form einer geschlossenen Schleife aufweist, die mit einer Lasche (9) zur Befestigung an der Welle (8) ausgestattet ist.

18. Gerät nach Anspruch 17, **dadurch gekennzeichnet, dass** das Arbeitswerkzeug (7) als ein einziges Materialband, vorzugsweise aus Metall, ausgebildet ist, dessen Enden sich vereinigen, um die Befestigungslasche (9) zu bilden.

19. Gerät nach einem der Ansprüche 17 und 18, **dadurch gekennzeichnet, dass** das Arbeitswerkzeug (7) eine Form einer geschlossenen Schleife mit einer im Wesentlichen rechteckigen allgemeinen Form aufweist, von der ein erster Abschnitt (10), der im Wesentlichen eben und während der Verwendung des Geräts (1) parallel zum Boden ist, schneidend und mit Zähnen ausgestattet ist, vorzugsweise auf seinen beiden gegenüberliegenden Seiten, und von der zwei zweite Abschnitte (10'), welche den ersten Abschnitt (10) beiderseits verlängern und sich während der Verwendung in einer im Wesentlichen zum Boden senkrechten Ebene erstrecken, schneidend sind, vorzugsweise auf den beiden gegenüberliegenden Seiten.

20. Gerät nach einem der Ansprüche 6 bis 8, **dadurch gekennzeichnet, dass** das Arbeitswerkzeug (7) mit dem vorspringenden Teil (8') der Antriebswelle (8) über ein Verbindungsteil (11') fest verbunden ist, das einen Anschlussbereich aufweist, der mit Rastelementen oder einer Innenverzahnung versehen ist und geeignet ist, in axialen Eingriff mit Zahneingriff mit komplementären Rastelementen oder einer komplementären Verzahnung (8") zu kommen, die auf dem vorspringenden Teil vorhanden sind (ist), wobei die feste Verbindung durch Schrauben oder Ähnliches verriegelt wird.

21. Gerät nach Anspruch 20, **dadurch gekennzeichnet, dass** das Arbeitswerkzeug (7) aus einer Kralle oder einer Gabel mit mehreren Zähnen besteht, die um die Achse der Antriebswelle (8) schwingt, welche bei der Verwendung des Geräts (1) vertikal positioniert ist, wobei das Werkzeug (7) in der mittleren Winkelposition, je nach der Einstellung derselben, eine bezüglich der Längsachse des Stiels (2) nicht senkrechte Lage aufweisen kann.

22. Gerät nach einem der Ansprüche 1 bis 21, **dadurch gekennzeichnet, dass** der Stiel (2) an seinem dem Kopf (6) gegenüberliegenden Ende (3) mit einem Griff (2') versehen ist, wobei in diesen Griff (2') eine Elektronikplatine zur Steuerung des elektrischen Aktuators (5) integriert ist, der mit Steuerungs- und Geschwindigkeitswahleinrichtungen verbunden ist.

23. Gerät nach Anspruch 9, **dadurch gekennzeichnet, dass** die autonome Energiequelle (1') aus einer wiederaufladbaren elektrischen Batterie vom Typ einer Lithium-lonen- oder Lithium-Polymer-Batterie besteht, die vorzugsweise vom Benutzer mittels eines Gurtzeugs getragen wird.

24. Gerät nach einem der Ansprüche 1 bis 23, **dadurch gekennzeichnet, dass** das Arbeitswerkzeug (7) mit einer Frequenz zwischen 10 und 25 Hz schwingt, vorzugsweise mit etwa 15 Hz.
